# EUROPEAN PATENT SPECIFICATION

(11) **EP 2 893 804 B1**
(45) Date of publication and mention of the grant of the patent: **21.03.2018**
(21) Application number: 12883959.4
(22) Date of filing: 03.09.2012
(51) Int. Cl.: A01K 61/00

(54) **RESERVOIR-CAGE SUBMERSION SYSTEM FOR THE CULTURE AND/OR CONTAINMENT OF HYDROBIOLOGICAL SPECIES**
UNTERTAUCHSYSTEM FÜR RESERVOIRKÄFIG ZUM KULTIVIEREN UND/ODER EINDÄMMEN VON HYDROBIOLOGISCHEN SPEZIES
SYSTÈME D'IMMERSION D'UN RADEAU-CAGE DESTINÉ À LA CULTURE ET/OU AU CONFINEMENT D'ESPÈCES HYDROBIOLOGIQUES

(43) Date of publication of application: 15.07.2015
(73) Proprietor: Ecosea Farming S.A., 5480000 Puerto Montt (CL); Sanchez Raccaro, Rodrigo, 5480000 Puerto Montt (CL); Buschmann Schilmer, Walter, Puerto Montt 5480000 (CL)
(72) Inventor: SANCHEZ RACCARO, Rodrigo, Puerto Montt 5480000 (CL); BUSCHMANN SCHILMER, Walter, Puerto Montt 5480000 (CL)
(74) Representative: Carvajal y Urquijo, Isabel
(86) International application number: PCT/CL2012/000049
(87) International publication number: WO 2014/032199

(56) References cited:
- WO-A1-01/52638
- WO-A1-01/65925
- WO-A1-96/29860
- FR-A1- 2 415 959
- US-A- 4 257 350
- US-A- 5 251 571
- US-A- 5 412 903
- US-A1- 2009 288 612
- US-B1- 6 481 378

## Description

Floating rafts and cages are widely used worldwide in aquaculture and for the containment of hidrobiological species. This activity is mainly located near the coastal zones, usually associated with protected areas or semi-exposed, which in some cases, has led to health crises caused by pathogens such as bacteria or viruses ectoparasites. Thus, the aquaculture industry has sought new areas for the growing, nurture and harvest of such species, and also to decompress the coastal zone, trying therefore to stablish itself in areas where the variables, chemical, biological and physical efficiency increase productivity. However, this type of areas situated far from the coasts, are characterized by their high energies due to strong currents and waves, commonly known or classified as exposed areas.

A prior art related to floating rafts is the document WO0152638 A1, which is addressed to a device for anchoring floating cages for fish, fish pots and cages, which is designed for using with submersible fish farming cages, fish pots and the like. This device involves a mooring device, operation and recovery of these with the help of a centrally placed unit.

With that on mind, and considering all the possible undesirable effects of natural high energies of such sites, is that it is essential to develop new technology in floating cages that allow the unit, as a whole, to avoid adverse weather conditions that could endanger both fish production and the confinement infrastructure.

Accordingly, and to substantially improve the growing conditions in adverse oceanographic environments, we propose a submergible system according to claim 1 which is driven by both buoyancy and weight principles. To accomplish buoyancy, a cylinder type system has been structured, consisting in a tubular container closed at its top and open at its bottom, through which water enters filling the receptacle leaving a small air chamber in its top section that connects a hose to the outside, allowing the user to empty it or fill it with water, as air is entered or released respectively. This invention allows the raft/cage system to be submerged to a controlled depth, or surfaced at the user's will, using air and weight or counterweight as the case required.

The present invention or sinking system corresponds to a fundamental component of the submersible raft/cage system, characterized by allowing its controlled and uniform immersion in case face of adverse oceanographic conditions or security reasons that could jeopardize the production or corresponding infrastructure, as well as to achieve improvements in the conditions of hatchery or growth present in varying depths depending on the case.

This proposal is based on the configuration of a system that is attached to the bottom of the raft/cage system, in which both operating principles of buoyancy and weight, allow to submerge the raft-cage system at the user's discretion.

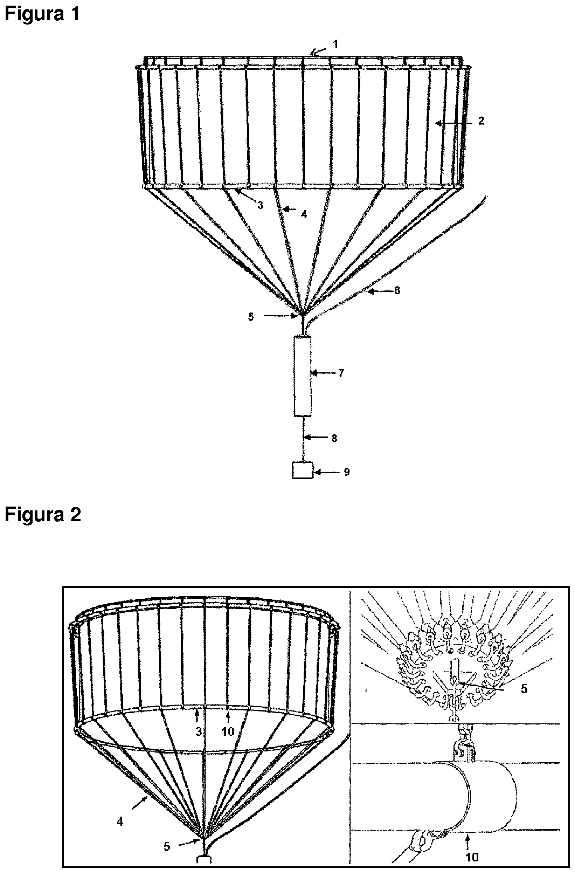

Figure No. 1 shows a sectional view of submersible cage/raft system, which is displayed in the different parts or components. Firstly, there is the raft (1), illustrated in this case, and by no way limited to this form, in a circular shape, that provides buoyancy to keep the system at the surface on one side, as also provides the structure which binds to the mesh or cage (2). Further, in the lower part, there is a lower ring (3) of equal or different size in terms of diameter as the surface rings. This ring can have a dual function, as current breaker in one hand, and as the frame which holds the sinking system by the other, so no stresses or strains is transferred to the synthetic or rigid meshes.

Ropes or cables (4) are attached to the lower ring (3), at an equal distance between them, and then fasten to a distribution ring (5), allowing that once immersion begins, the raft-cage system is submerged uniformly. Further down, this distribution ring (5) has an eyebolt (preferably made of galvanized steel) in its lower part, , to which one rope, cable or chain is connecting the distribution ring (5) to the buoyancy cylinder (7) at its lower end. The buoyancy cylinder (7) has an opening in its lower part, allowing water entrance, while in its upper part, the cylinder (7) is closed and connectable with the sea surface via a hose (6) configured for injecting air into the air chamber of the cylinder leads air. The cylinder (7) has at its open bottom, a solid structure of the same material as the cylinder, whose other end is connected to a chain (8) that connects finally to a dead weight (9). The dead weight's main function is to keep the cage/raft system submerged while the buoyancy cylinder is filled with water, thus disabling the generation of buoyancy thereof.

The joint between the distribution ring (5) and the lower ring (3) as illustrated in Figure N ° 2, is performed by the use of ropes, cables or chains (4), which are located equidistant from one another, generating an homogenous distribution of the sinking force, thus achieving an even submersion of the raft/cage system. All of these joint elements are connected on their upper parts to a bracket (10) or metal structures that have lugs of the same material, by which passes a loop (buttonhole type of termination formed by itself) at the top of the line (if this is the case) which is connected to the eyebolt (buttonhole shaped metal structure termination) by shackles (12). In case the system does not have brackets (10) or metal structures (galvanized) arranged equidistantly along the pipeline, these elements are connected using clove hitch knots. However, and regardless of the type of connection at the top, the bottom end of this element or component must converge to the distribution ring.

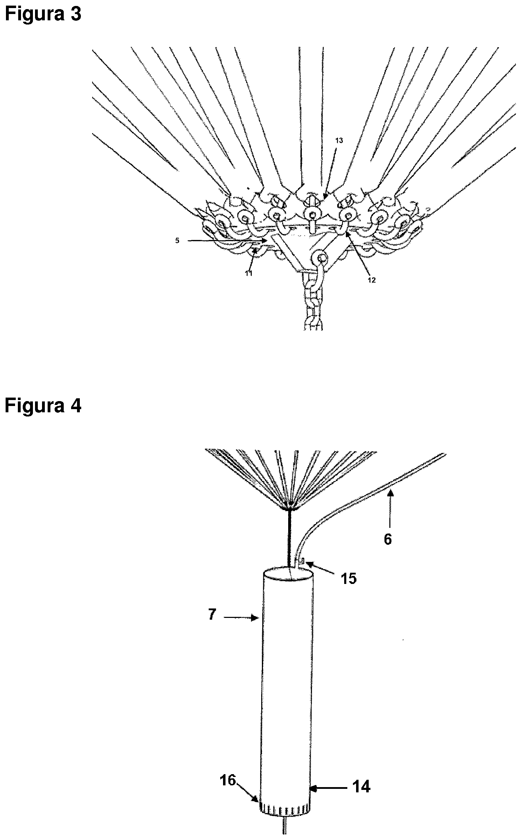

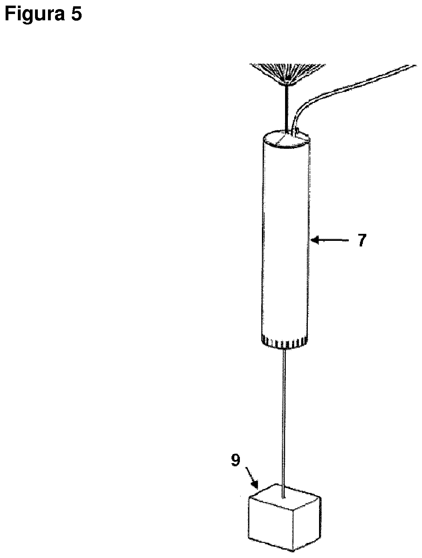

Figure No. 3 illustrates the distribution ring (5), where all elements converge such as ropes, cables, or chains (4). In this regard, each element is connected to an orifice in the distribution ring (5) which maintains an equal distance between them so as to maintain an even stress distribution. The connection element of rope or cable or chain to the distribution ring, is performed by a shackle (12) which passes through the gauze (13) of the element on the one hand and connects to the said orifice in the distribution ring on the other. Finally, the bottom (11) of the distribution ring (5) displays a binding eyebolt, to where a rope, cable or chain is connected to the bottom of buoyancy cylinder (similar procedure as described above). The length of this end should be at least 7 meters.

The buoyancy cylinder (7) is illustrated in Figure N ° 4, and provides the flotation necessary to counteract the weight generated by the dead weight or counterweight, so that the buoyancy of the raft-cage system itself maintains the whole structure in surface. On the other hand, if the buoyancy cylinder is filled with water, the weight force generated by the dead weight or counterweight will greater, so that the raft/cage system will submerged at a known depth according to its design, which is given mainly by the length of the maneuvers of ropes or cables between the distribution ring and the cylinder of buoyancy by one hand, and length of the connection element between the buoyancy cylinder and the dead weight. The length of each of these maneuvers provides security to the general configuration, providing a controlled maximum depth of submersion in case of an emergency.

Moreover, the buoyancy cylinder (7), in its internal top, always maintains an air chamber which is connected to the air hose (6) up until the surface, hose that is sealed by valves (15) at both ends. This hose (6) has the function of injecting air into the main cylinder (7), so that if it is desired to keep the raft-cage system at the surface, the valve (15) will be opened at the surface and air enters the cylinder by means of a compressor, allowing or generating water to evacuate from inside the cylinder, creating buoyancy gradually to a point where the water leaves almost entirely, thus allowing the buoyancy cylinder to counteract or neutralize the sinking force applied by the dead weight or counterweight, permitting therefore, that the buoyancy of the raft/cage system itself, to keep the entire structure on surface. Conversely, if the system requires to submerge, the top surface valve is open, so that by effect of pressure, the water will enter into the buoyancy cylinder displacing the air which is evacuated by the referred hose. Thus, the cylinder loses its ability to generate buoyancy, so that the dead weight or counterweight, having a negative vector (weight) higher than the buoyant raft-cage system, allows it to be submerged to the controlled depth of design. Additionally, the buoyancy cylinder (7) in its lower section has a strip (14) with holes (16) in the steel structure, which functions as an aeration system for the raft cage, which is generated by injecting air from a hose connected to a compressor surface.

Finally the system comprises a dead sinking or counterweight (9) as illustrated in Figure N ° 5, and is positioned in the lower part of the submersible raft/cage system (1). This dead weight or counterweight (9) is constructed primarily in concrete, representing a weight relative to the buoyancy of the cylinder (7) characterized by generating a sinking component sufficient to ensure tension between the surfaced raft/cage system and the dead weight, preventing in such form the drift or unwanted movements that could be harmful to the submersible raft-cage system.

## Claims

1. A uniform and controlled sinking system for submerging a raft or cage at user's discretion in case of adverse conditions that could jeopardize the fish production and the corresponding infrastructure, the system comprises
- a raft or cage (1) configured for buoyancy,
- a lower ring (3) bounded to the lower part of the raft (1) by means of a mesh (2),
- a distribution ring (5) configured for uniformly submerging the system, which is attached to the lower ring (3) by means of ropes or cables (4) at an equal distance between them and
said distribution ring (5) having an eyebolt in its lower part, to which one rope, cable or chain being connected,
this rope, cable or chain is connecting the distribution ring to a cylinder (7), which in its upper part is closed and maintains an air chamber and has an open bottom through which the water can enter, and
the cylinder (7) is connectable with the sea surface via a hose (6) configured for injecting air into the air chamber of the cylinder (7),
- a dead weight (9) configured for maintaining said raft (1) submerged, which is connected to the bottom of the cylinder (7) by means of a chain (8).

2. A sinking system according to claim 1, **characterized in that** the cylinder (7), in its lower section, has a strip with holes (16) configured functioning as an aereation system for the raft cage.

3. A sinking system according to claim 1, **characterized in that** the dead weight (9) is configured for generating a sinking component sufficient to ensure tension between the raft/cage system and the dead weight to avoid drift or unwanted movements that endanger or cause detriment to the submersible raft-cage system.

4. A sinking system according to claim 1, **characterized in that** both ends of the hose (6), which is connected to the air chamber of the cylinder (7), are sealed by valves (15).

5. A sinking system according to claim 1, **characterized in that**, all of the ropes or cables (4) are connected on their upper parts to a bracket (10) or metal structure that have lugs from the same material.

6. A sinking system according to claim 5, **characterized in that** the brackets (10) or metal structure are made of galvanized steel.

7. A sinking system according to claim 5, **characterized in that** each rope or cable is connected to an orifice in the distribution ring (5) which maintains an equal distance between them so as to maintain an even stress distribution, wherein the connection between the rope or cable to the distribution ring is performed by a shackle on the one hand and connects to the said orifice in the distribution ring on the other.

## Patentansprüche

1. Einheitliches und gesteuertes Absenksystem zum Untertauchen eines Floßes oder Käfigs nach Wahl des Benutzers bei ungünstigen Bedingungen, welche die Fischproduktion und die entsprechende Infrastruktur gefährden könnten, wobei das System Folgendes umfasst
- ein Floß oder einen Käfig (1), das bzw. der für den Auftrieb konfiguriert ist,
- einen unteren Ring (3), der an den unteren Teil des Floßes (1) mittels eines Netzes (2) gebunden ist,
- einen Verteilungsring (5), der zum einheitlichen Untertauchen des Systems konfiguriert ist, der an dem unteren Ring (3) mittels Seilen oder Kabeln (4) in einem gleichen Abstand zwischen ihnen befestigt ist, und
der Verteilungsring (5) einen Augbolzen in seinem unteren Teil aufweist, mit dem ein Seil, Kabel oder eine Kette verbunden ist,
wobei dieses Seil, Kabel oder diese Kette den Verteilungsring mit einem Zylinder (7) verbindet, der in seinem oberen Teil geschlossen ist und eine Luftkammer aufrechterhält und einen offenen Boden aufweist, durch den das Wasser eintreten kann, und
der Zylinder (7) mit der Meeresoberfläche durch einen Schlauch (6) verbunden ist, der zum Einpressen von Luft in die Luftkammer des Zylinder (7) konfiguriert ist,
- ein Eigengewicht (9), das konfiguriert ist, das Floß (1) untergetaucht zu halten, und das mit dem Boden des Zylinders (7) mittels einer Kette (8) verbunden ist.

2. Absenksystem nach Anspruch 1, **dadurch gekennzeichnet, dass** der Zylinder (7) in seinem unteren Abschnitt einen Streifen mit Löchern (16) aufweist, die konfiguriert sind, als ein Lüftungssystem für den Floßkäfig zu fungieren.

3. Absenksystem nach Anspruch 1, **dadurch gekennzeichnet, dass** das Eigengewicht (9) zum Erzeugen einer Absenkkomponente konfiguriert ist, die ausreicht, um eine Spannung zwischen dem Floß/Käfig-System und dem Eigengewicht zu gewährleisten, um eine Abdrift oder unerwünschte Bewegungen zu vermeiden, die das Unterwasser-Floß-Käfig-System gefährden oder beeinträchtigen.

4. Absenksystem nach Anspruch 1, **dadurch gekennzeichnet, dass** beide Enden des Schlauchs (6), der mit der Luftkammer des Zylinders (7) verbunden ist, durch Ventile (15) verschlossen sind.

5. Absenksystem nach Anspruch 1, **dadurch gekennzeichnet, dass** alle Seile oder Kabel (4) an ihren oberen Teilen mit einer Klammer (10) oder Metallstruktur verbunden sind, die Ansätze aus dem gleichen Material aufweist.

6. Absenksystem nach Anspruch 5, **dadurch gekennzeichnet, dass** die Klammern (10) oder die Metallstruktur aus galvanisiertem Stahl hergestellt sind.

7. Absenksystem nach Anspruch 5, **dadurch gekennzeichnet, dass** jedes Seil oder Kabel mit einer Öffnung im Verteilungsring (5) verbunden ist, die einen gleichen Abstand zwischen ihnen aufrechterhält, um so eine gleichmäßige Spannungsverteilung aufrechtzuerhalten, wobei die Verbindung zwischen dem Seil oder Kabel zum Verteilungsring einerseits durch einen Schäkel erfolgt und andererseits mit der genannten Öffnung im Verteilungsring verbunden ist.

## Revendications

1. Système de naufrage uniforme et contrôlé pour submerger un radeau ou une cage à la discrétion de l'utilisateur en cas de conditions défavorables qui pourraient mettre en péril la production de poissons et l'infrastructure correspondante, le système comprend
- un radeau ou une cage (1) configurée pour la flottabilité,
- un anneau inférieur (3) relié à la partie inférieure du radeau (1) au moyen d'un filet (2),
- un anneau de distribution (5) configuré pour submerger uniformément le système, qui est relié à l'anneau inférieur (3) au moyen de cordes ou câbles (4) à une distance égale entre eux et
ledit anneau de distribution (5) ayant un boulon à oeil dans sa partie inférieure, auquel une corde, un câble ou une chaîne est raccordée,
ce cordon, ce câble ou cette chaîne raccorde l'anneau de distribution à un cylindre (7), qui sur sa partie supérieure est fermée et maintient une chambre à air et a un bas ouvert à travers lequel l'eau peut entrer, et
le cylindre (7) peut être raccordé à la surface de la mer via un tuyau (6) configuré pour injecter de l'air dans la chambre à air du cylindre (7),
- un poids mort (9) configuré pour maintenir ledit radeau (1) submergé, qui est raccordé au bas du cylindre (7) au moyen d'une chaîne (8).

2. Système de naufrage selon la revendication 1, **caractérisé en ce que** le cylindre (7), dans sa section inférieure, a une bande avec des orifices (16) configurée en fonctionnant comme un système d'aération pour le radeau cage.

3. Système de naufrage selon la revendication 1, **caractérisé en ce que** le poids mort (9) est configuré pour générer un composant de naufrage suffisant pour assurer la tension entre le système radeau/cage et le poids mort pour éviter les mouvements de dérive ou non voulus qui mettent en danger ou portent préjudice au système radeau-cage submersible.

4. Système de naufrage selon la revendication 1, **caractérisé en ce que** les deux extrémités du tuyau (6), qui est raccordé à la chambre à air du cylindre (7), sont scellées par des vannes (15).

5. Système de naufrage selon la revendication 1, **caractérisé en ce que**, les cordes ou câbles (4) sont tous raccordés sur leurs parties supérieures à un support (10) ou structure métallique qui ont des cosses du même matériau.

6. Système de naufrage selon la revendication 5, **caractérisé en ce que** les supports (10) ou la structure métallique sont faits en acier galvanisé.

7. Système de naufrage selon la revendication 5, **caractérisé en ce que** chaque corde ou câble est raccordé à un orifice dans l'anneau de distribution (5) qui maintient une distance équidistance entre eux de sorte à maintenir une distribution homogène de la tension, dans lequel le raccordement entre la corde ou le câble à l'anneau de distribution est réalisé par une manille d'un côté et est raccordé audit orifice dans l'anneau de répartition de l'autre.
